# EUROPEAN PATENT SPECIFICATION

(11) **EP 0 948 926 B1**
(45) Date of publication and mention of the grant of the patent: **01.10.2003**
(21) Application number: 99104573.3
(22) Date of filing: 08.03.1999
(51) Int. Cl.: A47J 31/24, A47J 31/46, A47J 31/40

(54) **Automatic espresso-type coffee vending machine**
Kaffee-Automat vom Espresso-Typ
Machine à café automatique du type Espresso

(30) Priority: 06.04.1998 IT PN980025 U
(43) Date of publication of application: 13.10.1999
(73) Proprietor: Necta Vending Solutions S.p.A., 24030 Valbrembo, Bergamo (IT)
(72) Inventor: Gavazzi, Stefano, 24020 Albino (Bergamo) (IT); Pesenti, Giancarlo, 24030 Almenno S. Bartolomeo (Bergamo) (IT)
(74) Representative: Agostini, Agostino

(56) References cited:
- EP-A- 0 465 877
- DE-U- 29 711 147
- US-A- 5 551 331
- US-A- 5 636 563

## Description

The present invention refers to a vending machine which, upon having been provided with a corresponding input signal through the introduction of coins, tokens, electronic keys or magnetic cards, prepares and dispenses espresso-type coffee.

An automatic vending machine of the above cited kind comprises a cylindrical brewing chamber in which a metered amount, or dose, of raw material (ground coffee, in this case) is placed on a filter that is associated to a first moving plunger. A pre-determined amount of hot water is then introduced under pressure in said chamber and, owing to the presence of a second plunger which remains stationary and closes the upper end portion of the chamber during brewing, is forced to seep through said raw material against the reaction of said first plunger. The so obtained brew then flows into a cup or glass placed therebeneath.

The use of plastic materials has been getting increasingly established in vending machines in the course of these last few years, in particular as far as such component parts as the brewing chamber are concerned. The manufacturing technology ensuing from such a trend turns in fact out to be not only rational, but also very cost-effective.

The use of plastic materials, therefore, is particularly, although not exclusively suitable in automatic machines that are relatively simple, such as the ones intended for applications submitted to not too heavy a duty, so that they are generally operated according to a quite sporadical pattern in the course the day, wherein even quite long periods of time may elapse between atwo successive deliveries of hot beverage.

In these circumstances it has been observed that approx. 5 minutes of idleness, ie. inoperative state of the machine, after it has dispensed a hot beverage, are adequate in view of enabling the temperature of the above mentionaed component parts made of plastic material to lower down to substantially the value of the surrounding ambient temperature, which is typically at anywhere between 20 and 25°C. The amount of hot water that is introduced in the brewing chamber, in the case of Italian-type espresso coffee, is so small (it practically never exceeds 30 ml or so) as to be able to be cooled down almost immediately when it comes into contact with the walls of the chamber. During brewing, therefore, the temperature is caused to decrease well below the ideal value (which lies orientatively at approx. 80°C), so that a rather "cold", poor-quality beverage is practically obtained.

It would conceptually by possible for the temperature at which the water is introduced in the brewing chamber to be increased, but this would on the other hand imply, in all those cases in which coffee is dispensed at a fast pace, ie. in close succession, an excessively high temperature of the brewing water in the immediately subsequent deliveries of hot beverage, whereby the quality of the dispensed beverage would again incur a rapid deterioration, albeit for opposite reasons than mentioned above.

Documents EP-A-465 877 and US-A-5551331 disclose a machine comprising an additional heat source for heating the brewing head, said heating being controlled by a thermostat.

It therefore is a main purpose of the present invention to eliminate all such drawbacks so as to maintain, in an automatic espresso-type coffee vending machine having a brewing chamber made of plastic material, the optimum brewing temperature and, as a result, constantly ensure the dispensing of a high-quality beverage under all circumstances, even in those cases in which the rate at which the machine is operated is not very high.

These aims are reached in an automatic vending machine having the features claimed in the appended independent claim 1. Advantageous embodiments are disclosed in the dependent claims 2-5.

Characteristics and advantages of the present invention will anyway be more readily understood from the description of a preferred embodiment thereof which is given below by way of non-limiting example with reference to the accompanying drawings, in which only those parts of a vending machine having some relevance in connection with the present invention, ie. particularly the brewing unit thereof, are illustrated for reasons of greater simplicity. In particular,
- Figure 1 is a view of the dispensing unit of an automatic espresso-type coffee vending machine in a resting state, ie. in the time interval comprised between two successive deliveries of hot beverage;
- Figure 2 is a view fully similar to the one illustrated in Figure 1, however showing a vertical section of the brewing unit of the vending machine during the phase in which the espresso coffee is being brewed.

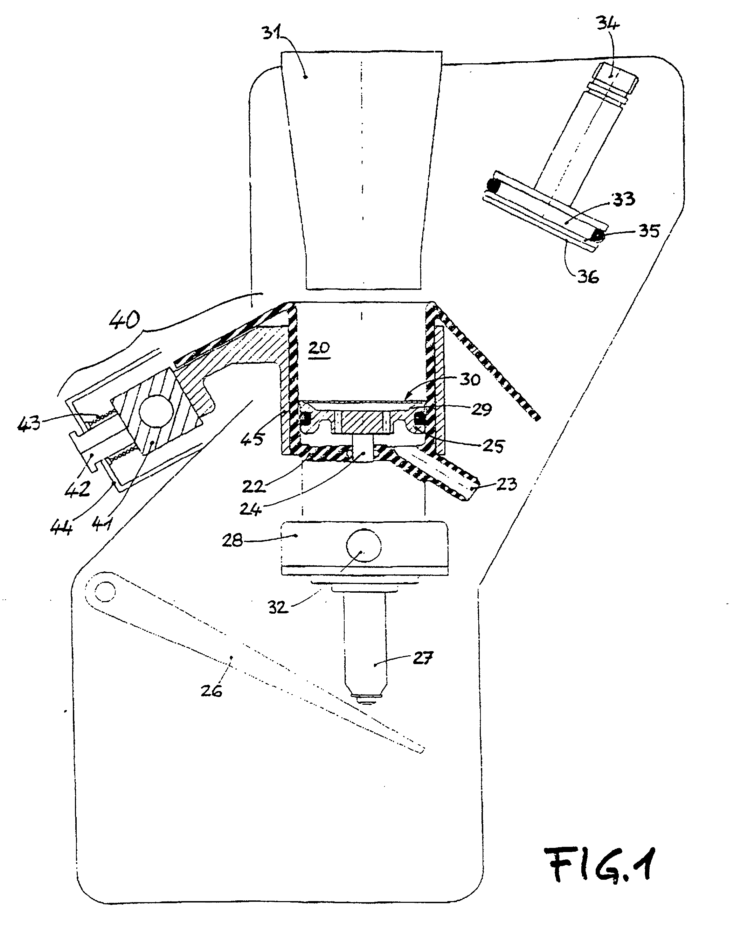

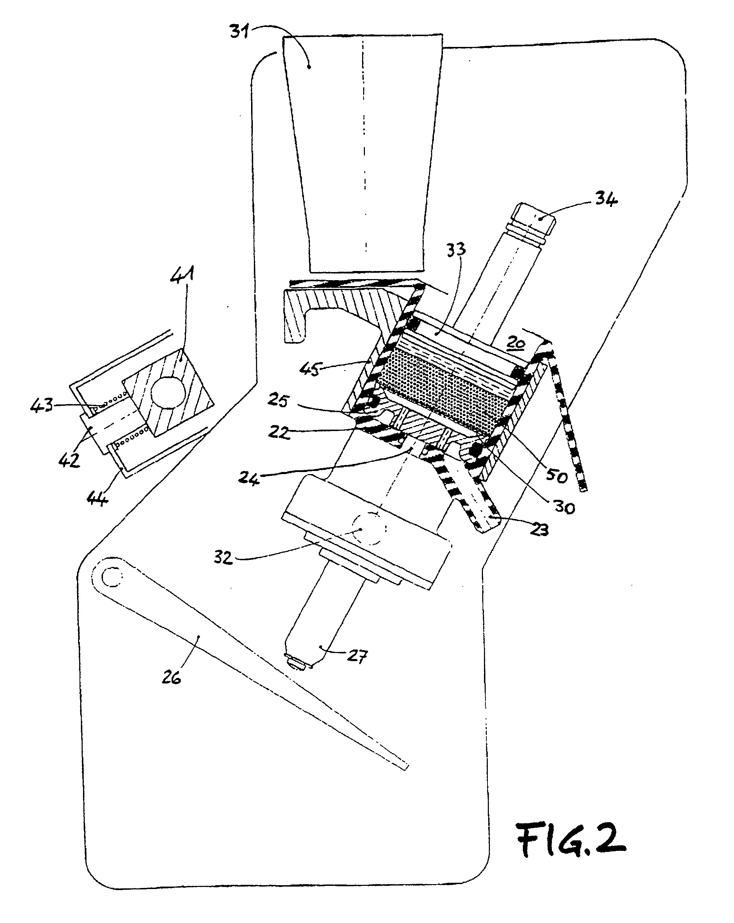

As illustrated in Figures 1 and 2, the brewing unit can be noticed to comprise a brewing chamber 20, which substantially includes a cylinder of plastic material whose upper end portion 21 is open and whose bottom wall 22, from which a tube 23 for dispensing the beverage branches off, is crossed through by the rod 24 of a first perforated plunger 25, which is called the moving plunger in this description.

Said moving plunger 25 (which can advantageously be provided in a form as described in another patent application filed at the same date by the same Applicant) is adapted to be displaced upwards by a crank mechanism 26 that acts on the free end 27 of the rod 24 protruding from a block or case 28 where a return spring (not shown) for the same plunger 25 is housed.

A filter 30 adapted to retain a dose 50 of ground coffee, either loose or in the form of a cartridge, is attached to the upper face 29, having a concave shape, of the moving plunger 25 - see Figure 2. The ground coffee is metered from above through a conveyor 31 that is aligned with the brewing chamber 20 during the periods in which the machine is not being operated and, anyway, before a brewing process is started - see Figure 1.

Upon said dose 50 of ground coffee having been so loaded, the whole brewing chamber 20 is displaced angularly about a pin 32 of the case 28 by the action of the afore cited crank mechanism 26. In this way, the brewing chamber 20 is brought into alignment with a second plunger 33, which will be referred to as the stationary plunger in this description, since it is not subject to any movement during the brewing phase, and is adapted to close the upper end portion 21 of the same chamber. An axial bore (not shown) connecting to an inlet tubing 34 extends through the plunger 33 which carries on its lower face 35 a filter 36 for the hot water.

At this point, the hot water, flowing from the boiler (not shown) of the vending machine through the inlet tubing 34, is delivered under pressure into the chamber 20 and overcomes the reaction exerted on the moving plunger 25 by the spring enclosed in the case 28. In this way, the hot water under pressure is able to seep through the ground coffee 50 and the lower filter 30, thereby bringing about the brewing process. The resulting brew flows through the perforations in the moving plunger 25 and into the tube 23, along which it then flows to reach its dispensing point.

What has been set forth hitherto in this description is substantially conventional technique, so that no need arises for it to be dealt with any further.

What is actually a characteristic feature of the present invention is on the contrary represented by the provision of an additional heat source, which is generally indicated at 40 in the drawings (see Figure 1) and whose functional component part consists of a positive temperature coefficient (PTC) resistor 41 that, via appropriate electric conductors (not shown), is capable of being supplied with power in the same way as the other functional component parts of the automatic vending machine. Said PTC resistor 41 is in its largely known form of a small ceramic plate and is retained, by means of a pin 42 and a retaining spring 43, on to a bracket 44 that is part of the structure of the automatic vending machine itself. The additional heat source 40 also comprises a sleeve 45 which, made of aluminium or any other suitable heat-conducting material, envelops with a certain interference the cylindrical surface of the brewing chamber 20. The sleeve 45 is provided with a radial appendix 46 that terminates with a flattened portion 47 having approximately the same size as the resistor 41 which is pressed against it by the spring 43. The resistor 41 has a modest power input rating (eg. approx. 20 to 30 Watt), which however is sufficient for the chamber 20 to be maintained at the optimum brewing temperature during the periods of time comprised between successive deliveries of hot coffee.

During these time intervals, the brewing chamber 20 is situated in the position shown in Figure 2, so that the heat generated by the resistor 41 is transferred conductively through said flattened portion 47, the radial appendix 46 and the sleeve 45, until it reaches the walls of the brewing chamber 20. In this way, the parts of the brewing unit that are made of plastic material, and in particular the brewing chamber 20, are no longer subject to a detrimental cool-down. It should be noticed that the selection of a PTC resistor instead of a traditional heating element is not to be seen as constraining or obligatory one, but it offers the advantage of bringing about a thermal self-regulation effect, without any need for an additional regulation device to be provided.

In order to carry out the brewing process, the chamber 20, as it has already been indicated earlier in this description, moves into the position shown in Figure 2, so that, owing to the fact that no contact is established between the resistor 41 and the flattened portion 47 of the sleeve 45, said additional heat source is not used.

The advantages of the present invention may be summarized as follows:
- the coffee brewing process takes place at an optimum temperature, without any risk for the hot beverage to cool down or to heat up to an excessive temperature;
- the additional heat source is of a particularly simple construction and requires an altogether negligible power input rating.

It will be appreciated that, although the above description and illustrations refer to a preferred embodiment, a number of modifications and variants can be introduced or implemented without departing from the scope of the present invention.

## Claims

1. Automatic espresso-type coffee vending machine, in particular for vending Italian-style espresso-type coffee, comprising a brewing unit , water heating means, means (34, 31) for supplying the raw material (50) and the hot water under pressure into the brewing chamber (20), said machine comprising an additional heat source (40) to heat the brewing chamber (20) **characterized in that** at least the brewing chamber (20) of the brewing unit is made of plastic and **in that** said additinal heat source (40) heats the brewing chamber (20) solely during the time intervals comprised between successive beverage dispensing operations.

2. Automatic espresso-type coffee vending machine according to claim 1, **characterized in that** it comprises substantially per sè known means (26) that are adapted to move the brewing chamber (20) from a resting position to a brewing one, wherein said brewing chamber (20) is heated by said additional heat source (40) when in its resting position.

3. Automatic espresso-type coffee vending machine according to claim 1 or 2, **characterized in that** said additional heat source (40) comprises at least an electric heating element (41).

4. Automatic espresso-type coffee vending machine according to claim 3, **characterized in that** said additional heat source (40) also comprises a heat-conducting portion (45), preferably in the form of a sleeve enveloping with a certain interference at least a part of the surface of the brewing chamber (20), said heat-conducting portion (45) being adapted to be brought into contact with said electric heating element (41).

5. Automatic espresso-type coffee vending machine according to claim 3 or 4, **characterized in that** said electric heating element (41) consists of a positive temperature coefficient (PTC) resistor.

## Patentansprüche

1. Automatische Espresso-Kaffeeverkaufsmaschine, insbesondere zum Verkauf von Espresso-Kaffee italienischer Art, die eine Brüheinheit, eine Wassererhitzungseinrichtung, eine Einrichtung (34, 31) zum Einleiten des Ausgangsstoffs (50) und des heißen Wassers unter Druck in die Brühkammer (20) umfasst, wobei die Maschine eine zusätzliche Wärmequelle (40) umfasst, die die Brühkammer (20) erhitzt, **dadurch gekennzeichnet, dass** wenigstens die Brühkammer (20) der Brüheinheit aus Kunststoff besteht und dass die zusätzliche Wärmequelle (40) die Brühkammer (20) nur während der Zeitabschnitte erhitzt, die zwischen aufeinanderfolgenden Getränkeausgabevorgängen liegen.

2. Automatische Espresso-Kaffeeverkaufsmaschine nach Anspruch 1, **dadurch gekennzeichnet, dass** sie eine im Wesentlichen an sich bekannte Einrichtung (26) umfasst, die die Brühkammer (20) aus einer Ruheposition in eine Brühposition bewegt, wobei die Brühkammer (20) von der zusätzlichen Wärmequelle (40) erhitzt wird, wenn sie sich in ihrer Ruheposition befindet.

3. Automatische Espresso-Kaffeeverkaufsmaschine nach Anspruch 1 oder 2, **dadurch gekennzeichnet, dass** die zusätzliche Wärmequelle (40) wenigstens ein elektrisches Heizelement (41) umfasst.

4. Automatische Espresso-Kaffeeverkaufsmaschine nach Anspruch 3, **dadurch gekennzeichnet, dass** die zusätzliche Wärmequelle (40) des Weiteren einen Wärmeleitabschnitt (45) vorzugsweise in Form einer Hülse umfasst, die mit einer bestimmten Presspassung wenigstens einen Teil der Oberfläche der Brühkammer (20) umschließt, wobei der Wärmeleitabschnitt (45) mit dem elektrischen Heizelement (41) in Kontakt gebracht wird.

5. Automatische Espresso-Kaffeeverkaufsmaschine nach Anspruch 3 oder 4, **dadurch gekennzeichnet, dass** das elektrische Heizelement (41) aus einem PTC-Widerstand besteht.

## Revendications

1. Machine à café automatique de type express, en particulier pour distribuer du café de type express de style italien, comprenant une unité de brassage, des moyens de chauffage de l'eau, des moyens (34, 31) pour fournir la matière première (50) et l'eau chaude sous pression dans la chambre de brassage (20), ladite machine comprenant une source de chaleur supplémentaire (40) pour chauffer la chambre de brassage (20) **caractérisée en ce qu'**au moins la chambre de brassage (20) de l'unité de brassage est réalisée en matière plastique et **en ce que** ladite source de chaleur supplémentaire (40) ne chauffe la chambre de brassage (20) que pendant les intervalles de temps compris entre des opérations de distribution de boisson successives.

2. Machine à café automatique de type express selon la revendication 1, **caractérisée en ce qu'**elle comprend des moyens sensiblement connus per se (26) qui sont adaptés pour déplacer la chambre de brassage (20) d'une position de repos à une position de brassage, dans laquelle ladite chambre de brassage (20) est chauffée par ladite source de chaleur supplémentaire (40) lorsqu'elle se trouve dans sa position de repos.

3. Machine à café automatique de type express selon la revendication 1 ou 2, **caractérisée en ce que** ladite source supplémentaire de chaleur (40) comprend au moins un élément chauffant électrique (41).

4. Machine à café automatique de type express selon la revendication 3, **caractérisée en ce que** ladite source de chaleur supplémentaire (40) comprend également une partie de .conduction de chaleur (45) de préférence sous la forme d'un manchon qui enveloppe, avec une certaine interférence, au moins une partie de la surface de la chambre de brassage (20), ladite partie de conduction de chaleur (45) étant adaptée pour être mise en contact avec ledit élément chauffant électrique (41).

5. Machine à café automatique de type express selon la revendication 3 ou 4, **caractérisée en ce que** ledit élément chauffant électrique (41) se compose d'une résistance à coefficient de température positif (CTP).
